Europäisches Patentamt

European Patent Office

Office européen des brevets

(11) Veröffentlichungsnummer : **0 340 203 B1**

(12) **EUROPÄISCHE PATENTSCHRIFT**

(45) Veröffentlichungstag der Patentschrift :
04.09.91 Patentblatt 91/36

(51) Int. Cl.⁵ : **B60J 5/06**

(21) Anmeldenummer : **89890100.4**

(22) Anmeldetag : **10.04.89**

(54) **Türschliesshilfe bei Schwenkschiebetüren an Fahrzeugen.**

(30) Priorität : **28.04.88 AT 1093/88**

(43) Veröffentlichungstag der Anmeldung :
**02.11.89 Patentblatt 89/44**

(45) Bekanntmachung des Hinweises auf die
Patenterteilung :
**04.09.91 Patentblatt 91/36**

(84) Benannte Vertragsstaaten :
**GB IT SE**

(56) Entgegenhaltungen :
**EP-A- 0 082 294**
**EP-A- 0 196 488**

(73) Patentinhaber : **Austria Metall**
**Aktiengesellschaft**
**A-5282 Braunau am Inn (AT)**

(72) Erfinder : **Gemeinböck, Gerhard**
**Anton Sattlerg. 115/17/7/23**
**A-1220 Wien (AT)**

(74) Vertreter : **WILHELMS, KILIAN & PARTNER**
**Patentanwälte**
**Eduard-Schmid-Strasse 2**
**W-8000 München 90 (DE)**

EP 0 340 203 B1

## Beschreibung

Bei herkömmlichen Schwenkschiebetüren läuft die Aufhängung des Türblattes in einer kulissenförmigen Führung, durch deren Formgebung das Türblatt zuerst mit einer Seite aus dem Türrahmen vorgeschoben wird und dann eine zum Wagenaufbau etwa parallele Öffnungsbewegung durchführt (siehe z.B. die EP-A-0196488).

Das gleiche geschieht in umgekehrter Reihenfolge beim Schließen der Tür. Das Einschwenken des Türblattes erfordert einen recht hohen Kraftaufwand, da aus konstruktiven Gründen die Kraftumsetzung durch den Bewegungsmechanismus ungünstig ist und dabei die Führungskulissen stark belastet werden. Als zusätzlicher Widerstand wirken auch noch die Dichtungen zwischen Türblatt und Türrahmen.

Aus diesem Grund müssen die Kulissen und Türblattaufhängungen auf die beim Einschieben der Tür auftretenden Lasten dimensioniert werden, das die Konstruktion schwer und teuer macht. Weiters ist der Verschleiß an den Kulissen in der Zone des Einschiebeweges wesentlich stärker als im übrigen Bereich.

Erfindungsgemäß wird dadurch Abhilfe geschaffen, daß am Wagenkasten im Bereich der Türöffnung mindestens eine geradlinige Führung vorhanden ist, an der mindestens ein Haken mit einem, zur Außenseite des Fahrzeuges gerichteten Schenkel verschiebbar gelagert und am Türblatt eine mit dem Haken kooperierende Aufnahme angebracht ist.

In weiterer Ausgestaltung der Erfindung kann die geradlinige Führung vertikal angebracht sein und jeweils ein Haken mit einer am Türblatt im Bereich der Ecken angebrachten zylindrischen Aufnahme kooperieren. Die geradlinige Führung ist am günstigsten im Bereich der, in Schließrichtung der Tür gesehen, hinteren Kante des Türrahmens anzubringen.

Eine günstige Ausführungsform des Hakens kann so gestaltet sein, daß im Schnittpunkt der beiden Schenkel des Hakens eine halbkreisförmige Ausrundung mit zum Außenschenkel hin, vorzugsweise zur geradlinigen Führung, parallelen Übergangsstelle, vorhanden ist und die mit dem Haken kooperierende Aufnahme ein zylindrischer Zapfen mit etwa gleichem Durchmesser wie die Ausrundung des Hakens ist.

Dadurch kann ein besonders verschleißfreier Betrieb der Türschließhilfe erfolgen.

Es ist günstig, die geradlinige Führung aus einer zylindrischen Stange herzustellen und den Haken mittels Kugellagerbüchsen auf diese zu lagern. Um eine Verdrehung auf der Führung zu verhindern oder um den Haken auf einer Schraubenlinie zu bewegen, ist es bei der erfindungsgemäßen Konstruktion vorteilhaft, daß parallel zur aus einer zylindrischen Stange ausgebildeten Führung eine kulissenförmige Führung vorhanden ist, in die ein am Haken angeordneter Zapfen, der in einer Büchse gelagert ist, eingreift.

Weiters ist es günstig, den Haken auf der Führung durch einen Zylinder, der pneumatisch oder hydraulisch beaufschlagt wird, zu bewerkstelligen.

Es ist vorteilhaft, daß der Öffnungsabstand zwischen den Schenkeln der Haken größer ist, als der benötigte Schwenkweg des Türblattes.

Dadurch können die Toleranzen in den Führungsteilen größer gehalten werden.

Die Erfindung wird anhand der nachstehenden Zeichnungen beschrieben.

Es zeigen :

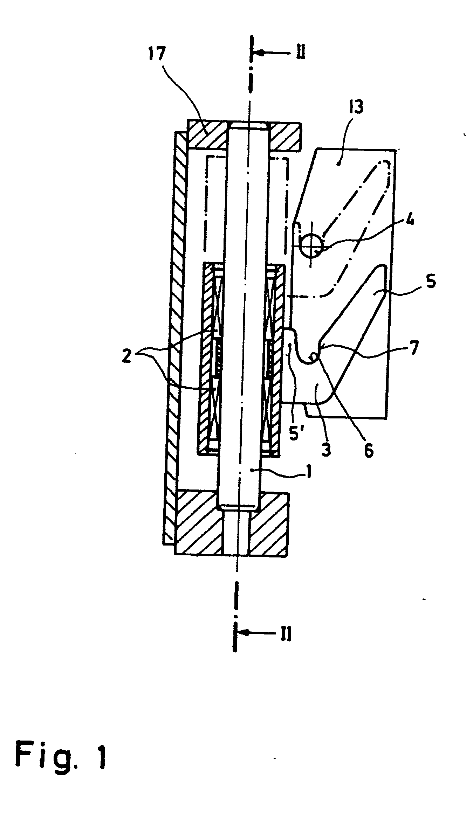

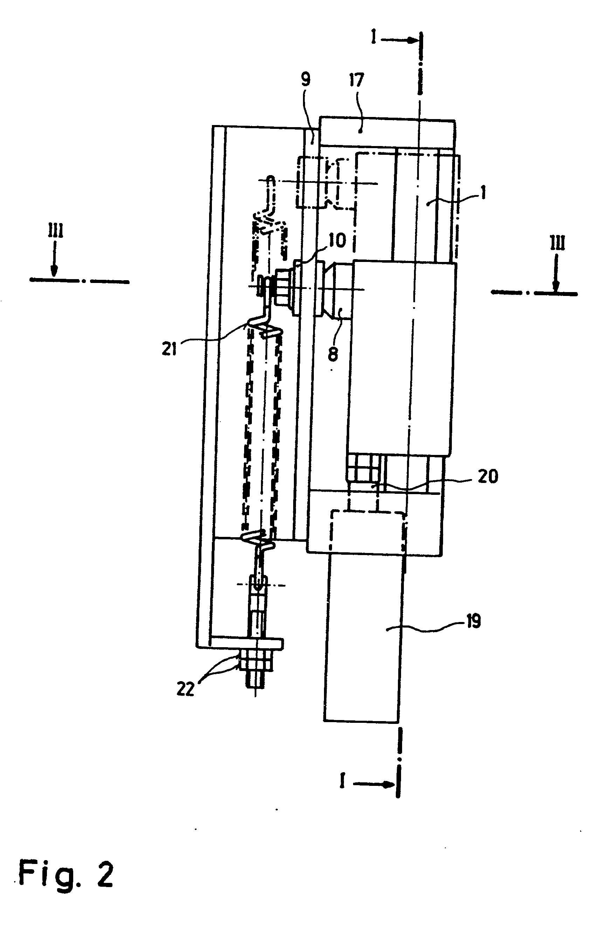

Fig. 1   einen Schnitt längs I-I in Fig. 2.
Fig. 2   einen Schnitt längs II-II in Fig. 1.

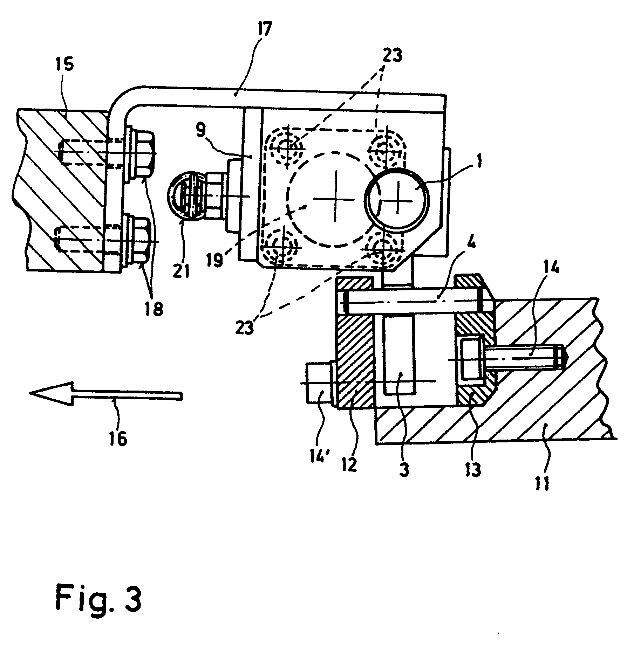

Fig. 3   einen Schnitt längs III-III in Fig. 1.

Die Führung 1, auf der mittels Kugellagerbüchsen 2 der Haken 3 verschieblich gelagert ist, bewirkt mit der mit ihm zusammenwirkenden Aufnahme 4 das Einziehen bzw. Schließen der Tür. Der Haken 3 besteht aus den Schenkeln 5 und 5', die im Schnittpunkt ihrer inneren Flächen die Ausrundung 6 mit der zur Führung 1 parallelen Übergangsstelle 7 aufweist. Ein am Haken 3 angebrachter Zapfen 8 greift in die Kulisse 9 ein und ist in dieser mit der Büchse 10 geführt. Die Aufnahme 4 am Türblatt 11 ist in den beiden Halteblechen 12 und 13 befestigt und mittels Schrauben 14 und 14' befestigt.

Die Führung 1 ist am Türrahmen 15 im Bereich der zur Öffnungsrichtung 16 vorderen Seite des Türblattes 11 im Gehäuse 17 angeordnet, das durch die Schrauben 18 am Türrahmen 15 angeschraubt ist. Der Zylinder 19 ist am unteren Ende des Gehäuses 17 mit den Schrauben 23 befestigt und bewegt mit seiner Kolbenstange 20 den Haken 3. Die Rückholfeder 21, die am Ende des durch die Kulisse 9 ragenden Zapfens 8 angehängt ist, ist mittels Stellverschraubung 22 am Gehäuse angebracht.

Die in den Figuren ausgezogenen Linien zeigen die Türschließhilfe in ihrer Ruhestellung, während die strichpunktierten Linien eine Aktionsstellung nach Beendigung des Türschliessens darstellen.

Die Erfindung ist nicht auf die angeführte Ausführung beschränkt, sondern ist diese lediglich beispielhaft.

**Patentansprüche**

1. Türschließhilfe für Schwenkschiebetüren an Fahrzeugen, dadurch gekennzeichnet, daß am Wagenkasten im Bereich der Türöffnung mindestens eine geradlinige Führung (1) vorhanden ist, an der mindestens ein Haken (3) mit einem, zur Außenseite des Fahrzeuges gerichteten Schenkel (5, 5') verschiebbar gelagert und am Türblatt (11) eine mit dem Haken (3) kooperierende Aufnahme (4) angebracht ist.

2. Türschließhilfe nach Anspruch 1, dadurch gekennzeichnet, daß die geradlinige Führung (1) vertikal angebracht ist und jeweils ein Haken (3) mit einer am Türblatt (11) im Bereich der Ecken angebrachten zylindrischen Aufnahme (4) kooperiert.

3. Türschließhilfe nach einem der vorhergehenden Ansprüche, dadurch gekennzeichnet, daß die geradlinige Führung (1) im Bereich an der, in Schließrichtung (16) der Tür gesehen, hinteren Kante des Türrahmens (15) angebracht ist.

4. Türschließhilfe nach einem der vorhergehenden Ansprüche, dadurch gekennzeichnet, daß im Schnittpunkt der beiden Schenkel (5, 5') des Hakens (3) eine halbkreisförmige Ausrundung (6) mit zum Außenschenkel hin, vorzugsweise zur geradlinigen Führung (1) parallelen Übergangsstelle (7), vorhanden ist und die mit dem Haken (3) kooperierende Aufnahme (4) ein zylindrischer Zapen (8) mit etwa gleichem Durchmesser wie die Ausrundung (6) des Hakens (3) ist.

5. Türschließhilfe nach einem der vorhergehenden Ansprüche, dadurch gekennzeichnet, daß die geradlinige Führung (1) aus einer zylindrischen Stange (20) besteht und der Haken (3) mittels Kugellagerbüchsen (2) auf dieser angeordnet ist.

6. Türschließhilfe nach einem der vorhergehenden Ansprüche, dadurch gekennzeichnet, daß parallel zur zylindrischen Stange (20) eine kulissenförmige Führung (1) vorhanden ist, in die ein mit dem Haken (3) starr verbundener Zapfen (8), der in der Büchse (10) gelagert ist, eingreift.

7. Türschließhilfe nach einem der vorhergehenden Ansprüche, dadurch gekennzeichnet, daß die Bewegung des Hakens (3) durch einen Zylinder (19) erfolgt.

8. Türschließhilfe nach einem der vorhergehenden Ansprüche, dadurch gekennzeichnet, daß der Öffnungsabstand zwischen den Schenkeln (5, 5') der Haken (3) größer ist, als der Schwenkweg des Türblattes (11).

**Claims**

1. A door closing aid for pivoting sliding doors on vehicles characterised in that provided on the vehicle body in the region of the door opening is at least one rectilinear guide (1) on which there is displaceably mounted at least one book (3) with a limb (5, 5') which is directed towards the outside of the vehicle, and mounted on the movable door member (11) is a receiving means (4) co-operating with the hook (3).

2. A door closing aid according to claim 1 characterised in that the rectilinear guide (1) is disposed vertically and a respective hook (3) co-operates with a cylindrical receiving means (4) provided on the movable door member (11) in the region of the comers.

3. A door closing aid according to one of the preceding claims characterised in that the rectilinear guide (1) is disposed in the region at the edge of the door frame (15) which is the rearward edge as viewed in the closing direction (16) of the door.

4. A door closing aid according to one of the preceding claims characterised in that provided at the point of intersection of the two limbs (5, 5') of the book (3) is a semicircular rounded recess (6), with a transitional location (7) towards the outer limb, which is preferably parallel to the rectilinear guide (1), and the receiving means (4) co-operating with the hook (3) is a cylindrical pin (8) of substantially the same diameter as the recess (6) in the book (3).

5. A door closing aid according to one of the preceding claims characterised in that the rectilinear guide (1) comprises a cylindrical bar (20) and the hook (3) is disposed thereon by means of ball bearing sleeves (2).

6. A door closing aid according to one of the preceding claims characterised in that provided parallel to the cylindrical bar (20) is a slide-like guide (1) into which engages a pin (8) which is rigidly connected to the hook (3) and which is mounted in the sleeve (10).

7. A door closing aid according to one of the preceding claims characterised in that the hook (3) is moved by a cylinder (19).

8. A door closing aid according to one of the preceding claims characterised in that the distance between the limbs (5, 5') of the hooks (3) is greater than the pivotal movement of the movable door member (11).

## Revendications

1. Dispositif de servomécanisme d'aide à la fermeture de portière, destiné à des portières pivotantes et coulissantes de véhicules, caractérisé en ce qu'il existe sur la carrosserie de voiture, dans la zone de l'ouverture de la portière, au moins un élément (1) de guidage rectiligne sur lequel est monté, de façon à pouvoir être déplacé, un crochet (3) comportant une branche (5, 5') dirigée vers le côté extérieur du véhicule et en ce qu'une pièce (4) de réception, coopérant avec le crochet (3), est montée sur le panneau (11) de portière.

2. Dispositif de servomécanisme d'aide à la fermeture de portière selon la revendication 1, caractérisé en ce que l'élément (1) de guidage rectiligne est monté verticalement et en ce que, dans chaque cas, un crochet (3) coopère avec une pièce (4) cylindrique de réception, ménagée sur le panneau (11) de la porte dans la zone des coins.

3. Dispositif de servomécanisme d'aide à la fermeture de portière selon une des revendications précédentes, caractérisé en ce que l'élément de guidage rectiligne (1) est monté dans la zone, qui, vue dans le sens (16) de fermeture de la porte, est située derrière le bord du cadre (15) de la porte.

4. Dispositif de servomécanisme d'aide à la fermeture de portière selon une des revendications précédentes, caractérisé en ce qu'au point d'intersection des deux branches (5, 5') du crochet (3), il existe un évidement (6) en forme de demi-cercle, comportant une zone (7) de transition en direction de la branche extérieure, de préférence parallèle à l'élément de guidage rectiligne, et en ce que la pièce (4) de réception coopérant avec le crochet (3) est un tenon cylindrique (8), dont le diamètre est approximativement égal à celui de l'évidement (6) arrondi du crochet (3).

5. Dispositif de servomécanisme d'aide à la fermeture de portière selon une des revendications précédentes, caractérisé en ce que l'élément (1) de guidage rectiligne est constitué par une tige cylindrique (20) et en ce que le crochet (3) est disposé sur celui-ci au moyen de manchons (2) à roulement à billes.

6. Dispositif de servomécanisme d'aide à la fermeture de portière selon une des revendications précédentes, caractérisé en ce qu'il existe, parallèlement à la tige cylindrique (20), un élément (1) de guidage en forme de coulisse, dans lequel pénètre un tenon (8) qui est relié de façon fixe au crochet (3), et qui est monté dans le manchon (10).

7. Dispositif de servomécanisme d'aide à la fermeture de portière selon une des revendications précédentes, caractérisé en ce que le déplacement du crochet (3) s'effectue au moyen d'un vérin (19).

8. Dispositif de servomécanisme d'aide à la fermeture de portière selon une des revendications précédentes, caractérisé en ce que la lumière ou écartement d'ouverture entre les branches (5, 5') des crochets (3) est supérieur(e) à la course de pivotement du panneau (11) de portière.

Fig. 1

# Fig. 2

Fig. 3